# EUROPÄISCHE PATENTANMELDUNG

(11) **EP 3 045 253 A1**
(43) Veröffentlichungstag der Anmeldung: **20.07.2016**
(21) Anmeldenummer: 15153511.9
(22) Anmeldetag: 02.02.2015
(51) Int. Cl.: B23K 1/008

(54) **Vorrichtung und Verfahren zum Entbindern von Lotpasten im Vakuum-Lötofen**

(30) Priorität: 19.01.2015 DE 102015100717
(71) Anmelder: PVA Industrial Vacuum Systems GmbH, 35435 Wettenberg (DE)
(72) Erfinder: BROICH, Udo, 35683 Dillenburg (DE); METZGER, Thomas, 35578 Wetzlar (DE)
(74) Vertreter: Blumbach Zinngrebe

(57) **Zusammenfassung**

Es wird ein Verfahren zum Entbindern von organischen Lotpasten vorgestellt mit den Schritten Einbringen einer Lötcharge in eine Heizkammer eines Vakuumofens, Aufheizen der Lötcharge in der Heizkammer um einen Lötvorgang herbeizuführen, Bereitstellen einer Gasströmung in der Heizkammer, welcher die Lötcharge in der Heizkammer umspült, Mischen eines Gas-Binder-Gemisches aus dem in die Heizkammer eingebrachten Gas mit bei dem Lötvorgang freiwerdenden Binderbestandteilen sowie Abführen des Gas-Binder-Gemisches aus der Heizkammer.

## Beschreibung

### Gebiet der Erfindung

Die Erfindung betrifft eine Vorrichtung und ein Verfahren zum Entbindern von Lotpasten im Vakuum-Lötofen.

### Hintergrund und allgemeine Beschreibung der Erfindung

Die Erfindung liegt auf dem Gebiet der Vakuumöfen, die zum Zwecke des Vakuum- oder Hochtemperaturlötens (HT-Löten) einsetzbar sind. Vakuumöfen sowie die Vakuumlöttechnik sind als solche grundsätzlich bekannt und kommerziell von verschiedenen Anbietern erhältlich, vgl. bspw. die Produktreihe der Firma XERION Advanced Heating Ofentechnik GmbH.

Vakuumlöten ist ein thermisches Fügeverfahren, das die Herstellung hochwertiger Fügeverbunde zwischen gleichartigen und ungleichartigen Werkstoffen ermöglicht. Entscheidend für die technologischen Eigenschaften des Fügeverbundes ist der eingesetzte Lotwerkstoff.

Dieser kann, je nach geometrischer Ausführung der Bauteile, als Draht, Folie oder Paste appliziert werden. Weit verbreitet in der Vakuumlöttechnik sind Lote auf Ag-Basis, die sich speziell für das Fügen von Kupferbauteilen eignen, sowie Ni-Basislote, die für das Löten hochbelastbarer Edelstahl- und Superlegierungsverbunde eingesetzt werden. Aber auch die sogenannten Aktivlote werden zunehmend eingesetzt, wenn keramische Werkstoffe, wie z.B. Al₂O₃ oder Si₃N₄, gefügt werden müssen. Im Allgemeinen weisen Hart-und Hochtemperaturlötverbindungen, welche in einem Vakuumofen hergestellt werden, hervorragende mechanische und chemische Eigenschaften auf. Bei einzelnen Lötverbindungen, wie z.B. bei Edelstahllötungen mit Nickellot, können bei geeigneter Lötprozessführung grundwerkstoffähnliche Eigenschaftsmerkmale erzielt werden.

Die Wirkungsweise der beschriebenen Hart- und Hochtemperaturlote beruht auf deren Fähigkeit, im schmelzflüssigen Zustand Bestandteile der zu fügenden Werkstoffe zu lösen und somit einen metallurgischen Verbund, ähnlich einer Schweißverbindung, zu erzeugen. Im Unterschied zum Schweißen erfolgt jedoch kein Aufschmelzen der zu fügenden Grundwerkstoffe, da der Schmelzbereich der Lotlegierungen deutlich unterhalb derjenigen der Grundwerkstoffe liegt.

Die Verlegung des Fügeprozesses in eine Vakuumatmosphäre verhindert eine Wechselwirkung der Lot- und Grundwerkstoffe mit der Umgebung. Hierdurch kann zum einen auf den Einsatz hochkorrosiver Flussmittel verzichtet werden. Zum anderen erfolgt durch die Vakuumatmosphäre im Fügeprozess keine Beeinflussung der physikalischen Eigenschaften der Grundwerkstoffe.

Die Wärmeeinbringung im Vakuumofen erfolgt integral, d.h. das gesamte Bauteil wird auf Löttemperatur erhitzt. Hierdurch können Verzüge, wie sie bei lokalen Erwärmungsverfahren wie dem Flammlöten oder dem Induktionslöten entstehen, weitestgehend vermieden werden. Des Weiteren können von außen schwer oder überhaupt nicht zugängliche Lötstellen gefügt werden.

Beim Vakuum- oder Hochtemperaturlöten (HT-Löten) von Großserienprodukten, insbesondere mit Lotpaste, kommt es während des Aufheizens der Lötcharge im Vakuumofen bei Temperaturen um 400-500°C zu einem Verdampfen bzw. zu thermischer Zersetzung des organischen Binders, wodurch große Dampf- bzw. Gasmengen gebildet werden. In konventionellen Vakuumöfen werden die gasförmigen Binderbestandteile im Vakuumbetrieb über die Vakuumpumpen abgesaugt und typischerweise in die Atmosphäre geleitet. Die Binderbestandteile können in kühle Bereiche des Vakuumofens gelangen, beispielsweise durch in der Regel vorhandene Spalten oder Öffnungen oder ganz allgemein Fehlstellen in der Isolation der Heizkammer, woraus eine ganze Reihe von negativen Erscheinungen resultieren kann.

So kann es zu Kondensation der Binderanteile an wassergekühlten Kesselwänden und Bauteilen (Kaltwandofen) kommen. Dies beeinträchtigt beispielsweise die Evakuierbarkeit des Vakuumofens.

Es kann zur Verunreinigung von Vakuummessröhren kommen, was ggf. zu Fehlmessungen führt und in Folge in Produktionsfehlern und somit Produktionsausfällen resultiert.

Darüber hinaus ist bei herkömmlichen Vakuumöfen auch in den Vakuumpumpen mit einer Kondensation der Binderanteile zu rechnen, welche in der Regel deren Standzeit bzw. Lebensdauer verkürzt und die Wartungskosten steigert.

Die genannten Probleme ziehen einen erhöhten Instandhaltungsaufwand für den Vakuumofen nach sich, was zu Lasten der Anlagenverfügbarkeit und somit der Wirtschaftlichkeit des gesamten Lötprozesses führt.

Vor diesem Hintergrund hat die Anmelderin eine Vorrichtung und ein Verfahren zum Entbindern von Lotpasten im Vakuum-Lötofen entwickelt, welche die vorstehend genannten Probleme löst oder zumindest mindert.

Es ergibt sich eine Aufgabe der vorliegenden Erfindung, die Kondensatbildung von organischen Bestandteilen an Bauteilen des Vakuum-Lötofens und/oder den Vakuumpumpen zu vermeiden, d.h. zu verringern oder zu unterbinden.

Ein weiterer Aspekt der Aufgabe ist, insbesondere bei wassergekühlten Bauteilen, bspw. bei einem Kaltwandofen, eine solche Kondensatbildung zu verringern oder zu unterbinden.

Somit ergibt sich auch ein weiterer Aspekt der Erfindung, den Instandhaltungsaufwand für den Betrieb eines Vakuumofens zu verringern und/oder die Anlagenverfügbarkeit zu vergrößern und/oder die Betriebskosten des Vakuumofens zu verringern.

Weitere Aufgaben ergeben sich aus der nachfolgenden Beschreibung bzw. den besonderen Vorteilen, die mit bestimmten Ausführungsformen erzielt werden.

Die Aufgabe wird durch den Gegenstand der unabhängigen Ansprüche gelöst. Vorteilhafte Ausführungsformen sind Gegenstand der abhängigen Ansprüche.

Die Erfindung kann bevorzugt beim Vakuumlöten von Edelstahlprodukten, beispielsweise von EGR-Kühlern, von Plattenwärmetauschern oder von Katalysatorträgern, eingesetzt werden. Bei solchen Großserienprodukten aus Edelstahl werden typischerweise Nickel- und/oder Kupferbasislotwerkstoffe in Form von Pasten eingesetzt. Zur Zeit werden für diese Anwendung überdies zunehmend auch Eisenbasislotwerkstoffe diskutiert, wobei die vorliegende Erfindung auch für solche und ähnliche Basislotwerkstoffe geeignet erscheint. Die Lotpasten umfassen typischerweise das eigentliche Lotmaterial, welches als Metallpulver vorliegt, einen organischen Binder sowie ein Lösemittel (z.B. Alkohol, Wasser). Der typische Binder- bzw. Lösemittelanteil in Nickel- bzw. Kupferlotpasten liegt im Bereich von 5 Gew.-% oder mehr und/oder bis 15 Gew.-% oder weniger.

Die Erfindung weist ferner besonders dann einen hohen Nutzen auf, wenn der Vakuumofen, bei dem die Erfindung eingesetzt wird, gekühlte Bereiche aufweist, d.h. Bereiche außerhalb der Heizkammer, die beispielsweise wassergekühlt sind oder ganz allgemein Kaltflächen oder Kaltwände darstellen.

Die Erfindung zeigt ein Verfahren zum Entbindern von organischen Lotpastenbestandteilen, insbesondere in Kaltwandvakuumöfen, unter Anwendung von strömendem Gas in einer besonders abgedichteten Heizkammer. Die Erfindung kann entsprechend auch in einem erfindungsgemäßen Vakuumofen mit einer entsprechenden Heizkammer realisiert sein.

Das Verfahren zum Entbindern von organischen Lotpasten weist erfindungsgemäß die folgenden Schritte auf.

Zunächst erfolgt das Einbringen einer Lötcharge in eine Heizkammer eines Vakuumofens. Die Lötcharge wird in der Heizkammer aufgeheizt, um einen Lötvorgang an der Lötcharge herbeizuführen.

eine Gasströmung wird in der Heizkammer erzeugt, welche die Lötcharge in der Heizkammer umspült. Mit anderen Worten wird ein Gas, bevorzugt ein Inertgas bzw. Edelgas (z.B. N₂, Ar), oder ein Reaktivgas (z.B. H₂), besonders bevorzugt ein lötprozessunabhängiges Gas, in die Heizkammer eingeführt und das Gas so durch die Heizkammer geströmt, dass es an der Lötcharge entlangströmt bzw. die Lötcharge umspült.

In einer weiteren Ausführungsform wird zunächst in dem die Heizkammer umgebenden Ofenraum ein Gasstrahl bzw. die Gasströmung bereitgestellt. Mittels des einströmenden Gases des Gasstrahls bzw. der Gasströmung wird bevorzugt ein relativer Druckunterschied zwischen dem Ofenraum und der Heizkammer erzeugt. Mit anderen Worten wird die Gasströmung zunächst in dem Ofenraum bereitgestellt, wobei der Ofenraum zur Umgebung hin druckdicht abgeschlossen ist, Absperrventile also geschlossen sind. Die Gasströmung erzeugt nun bei kontinuierlichem Nachströmen von Prozessgas einen relativen Überdruck in dem Ofenraum im Verhältnis zur Heizkammer. Aufgrund nicht vermeidbarer, jedoch gering gehaltener, Restspalten in der Abdichtung der Heizkammer strömt das Prozessgas in die geschlossene Heizkammer. Durch den relativen Druckunterschied zwischen Ofenraum und Heizkammer wird somit ein Rückströmen von Prozessgas in den Ofenraum und somit ein Transport von Binderbestandteilen aus der Heizkammer in den Ofenraum unterdrückt.

Bevorzugt wird also die Vakuumpumpe bzw. werden die Vakuumpumpen von dem Ofenraum getrennt, beispielsweise ein Absperrventil geschlossen, damit in dem Ofenraum ein Druck aufgebaut werden kann, und die Gasströmung bzw. der Gasstrahl nicht sogleich von der bzw. den Vakuumpumpe(n) abgesaugt wird.

Die Heizkammer ist insbesondere vor dem Einströmenlassen des Gases bzw. vor Erzeugung der Gasströmung mittels einer Evakuierungseinrichtung evakuiert. Mit anderen Worten liegt in der Heizkammer vor Erzeugung der Gasströmung ein Vakuum vor.

Das Vakuum wird in dem Vakuumofen erzeugt, um lötprozessstörende Partikel bzw. Moleküle, beispielsweise Sauerstoff, von dem Lötprozess fernzuhalten. Bestimmte Gase, beispielsweise Inertgase, stören jedoch den Lötprozess nicht, so dass deren Anwesenheit während des Lötvorgangs keine störende, negative oder zerstörende Wirkung auf das Lötergebnis aufweisen.

Bei dem Prozessgas zur Erzeugung der Gasströmung handelt es sich bevorzugt um ein Wasserstoffgas.

Freiwerdende Binderbestandteile, insbesondere organische Binderbestandteile, werden von dem strömenden Gas aufgenommen und ein Gas-Binder-Gemisch aus dem in die Heizkammer eingebrachten Gas mit bei dem Lötvorgang freiwerdenden Binderbestandteilen gemischt. Mit anderen Worten können die Binderbestandteile beispielsweise mit der Gasströmung mitgeführt werden und/oder die Gasmoleküle mit den Binderbestandteile Verbindungen eingehen und die Binderbestandteile als Gas-Binder-Moleküle in den Gasstrahl aufnehmen. In beiden Fällen entsteht ein Gas-Binder-Gemisch, welches die Binderbestandteile von der Lötcharge weg und aus der Heizkammer abführt.

Der Gasstrahl bzw. die Gasströmung, die in dem Ofenraum bereitgestellt wird, kann so eingestellt werden, dass zwischen dem Ofenraum und der von dem Ofenraum eingeschlossenen Heizkammer ein relativer Druckunterschied eingestellt ist. Mit anderen Worten herrscht in dem Ofenraum ein Überdrück gegenüber der Heizkammer, so dass sich ein Druckgradient zwischen Ofenraum und Heizkammer ausbildet. In vorteilhafter Weise verhindert der eingestellte Druckgradient daher auch, dass das Gas-Binder-Gemisch von der Heizkammer in den Ofenraum (gegen den Druckgradienten) entweicht.

Der Druckgradient kann beispielsweise über die folgenden zwei Verfahrensarten eingestellt werden.

Erstens kann das Prozessgas in den Ofenraum eingeleitet werden, wobei dieses Gas über die Restspalte in die Heizkammer gelangt bzw. einströmt. Die Druckdifferenz zwischen Ofenraum und Heizkammer ergibt sich durch Regelung des Ofenraumüberdruckes mittels des Prozessgases.

Zweitens kann das Prozessgas sowohl in den Ofenraum als auch in die Heizkammer mit zwei separaten Zuleitungen eingelassen werden. Der Druck im Ofenraum wird dabei so eingestellt oder geregelt, dass dieser höher ist als der Druck in der Heizkammer.

Bei beiden Ausführungsformen kann der Druck in der Heizkammer so eingestellt sein, dass ein Überdruck des Heizkammerabsolutdrucks gegenüber dem Atmosphärendruck vorliegt, so dass das Gas-Binder-Gemisch eigenständig über das Entbinderungsrohr in die Entbinderung, insbesondere die thermische Nachverbrennung, gelangt. Hierdurch kann besonders vorteilhaft eine Vakuumpumpe eingespart werden, die anderenfalls einen Kondensationsraum für die Binderbestandteile anböte.

Ggf. wird mittels eines Bindermesssystems festgestellt, in welchem Temperaturbereich oder Zustand sich die Lötcharge befindet, so dass die Gasströmung in dem Zeitbereich zur Verfügung gestellt werden kann, in dem die Entbinderung stattfindet. Hierdurch kann die zur Spülung benötigte Gasmenge reduziert werden. Mit anderen Worten misst das Bindermesssystem beispielsweise die Temperatur und/oder den Druck in dem Ofenraum und/oder der Heizkammer. Auch eine gezielte Erkennung der Gaszusammensetzung des Gas-Binder-Gemisches in der Gasströmung kann durch das Bindermesssystem beispielsweise mittels eines Massenspektrometers durchgeführt werden. Das Bindermesssystem ermöglicht oder erzeugt daher eine Zustandserkennung bzw. -anzeige der Lötcharge dahingehend, ob eine Entbinderung stattfindet.

Bei dem Bereitstellen der Gasströmung bzw. des Gasstrahls in dem Ofenraum wird ggf. ein Gas-Überdruck in dem Ofenraum aufgebaut, wobei sich die Terminologie "Überdruck" auf den Restdruck des Vakuums des Vakuumofens bezieht. Der Gas-Überdruck ist daher nicht ausschließlich als Überdruck im Sinne eines Druckes über dem Standard-Atmosphärendruck zu verstehen. Vielmehr kann der Gas-Überdruck im Ofenraum beispielsweise bis zu 200 mBar oder weniger über dem Restdruck im Vakuumofen betragen, der Gas-Überdruck kann bevorzugt auch bis zu 100 mBar oder weniger oder auch bis zu 50 mBar oder weniger über dem Restdruck im Vakuumofen betragen. Der Lötprozess wird bevorzugt von dem Gas der Gasströmung bzw. des Gasstrahls nicht beeinträchtigt.

Sofern die Entbinderung mit einem Druck stattfindet, der unterhalb des Standard-Atmosphärendrucks liegt, wird im Sinne der Erfindung von einer Vakuumentbinderung gesprochen, da der Absolutdruck im Ofen- und Heizraum typischerweise wie zuvor beschrieben deutlich unter dem Atmosphärendruck liegt.

Die Einstellung eines Gas-Überdruckes, der höher als der Standard-Atmosphärendruck ist, ist dabei ebenfalls möglich und bei der erfindungsgemäßen Überdruckentbinderung, die eine Variante der hier vorgestellten Erfindung dargestellt, sogar gezielt einstellbar. Mit anderen Worten wird bei der Überdruckentbinderung ein Atmosphärenüberdruck im Vakuumofen erzeugt, so dass sich der Vorteil einstellt, dass das Gas-Binder-Gemisch aus eigenem Antrieb dem Druckgefälle folgend aus dem Ofenraum beispielsweise über den dafür vorgesehenen Gasauslass entweicht.

Der Gas-Überdruck wird in einer bevorzugten Ausführungsform zunächst in dem Ofenraum eingestellt. Sobald der Vorgang der Entbinderung in der Heizkammer startet, steigt der Ortsdruck in der Heizkammer an. Der Gas-Überdruck in dem Ofenraum wird dabei bevorzugt weiter so eingestellt, dass der Druckgradient zwischen Ofenraum und Heizkammer nicht das Vorzeichen ändert. Mit anderen Worten wird der Absolutdruck in dem Ofenraum stets höher eingestellt als in der Heizkammer. Unter diesen Bedingungen wird das Gas-Binder-Gemisch in vorteilhafter Weise am Austreten aus der Heizkammer, beispielsweise durch eine Wärmeisolationsschicht hindurch, in den Ofenraum gehindert. Die Binderbestandteile werden daher nicht mehr an Kaltflächen oder ggf. in daran angeschlossenen Vakuumpumpen kondensieren. Dies stellt also sicher, dass auch kleinste Undichtigkeiten bzw. Leckagen in der Wärmeisolationsschicht zwischen Heizkammer und Ofenraum nicht mehr dazu führen, dass Gas-Binder-Gemisch in den Ofenraum entweicht. Darüber hinaus kann die Gasströmung langsam durch die thermische Isolationsschicht in die Heizkammer eindringen und somit auch in der Heizkammer eine Gasströmung in Gang setzen.

Der Absolutdruck im Ofenraum ist also größer als der Absolutdruck in der Heizkammer. Die Druckdifferenz ist dabei typischerweise jedoch recht klein. Beispielsweise kann bei der Überdruckentbinderung die Druckdifferenz zwischen Ofenraum und Heizkammer weniger oder gleich 50 mbar betragen. In einem typischen Beispiel könnte in einem erfindungsgemäßen Aufbau der Absolutdruck im Ofenraum 1080 mbar und der Absolutdruck in der Heizkammer 1060 mbar betragen.

Bei der Vakuumentbinderung ist der Druckunterschied zusätzlich abhängig vom Vakuumrestdruck, so dass bei geringeren Drücken die Druckdifferenz kleiner ist. Beispielsweise kann bei der Vakuumentbinderung die Druckdifferenz zwischen Ofenraum und Heizkammer weniger oder gleich 10 mbar betragen. In einem typischen Beispiel könnte in einem erfindungsgemäßen Aufbau der Absolutdruck im Ofenraum 80 mbar und der Absolutdruck in der Heizkammer 75 mbar betragen.

Sofern ein Bindermesssystem eingesetzt wird, ist es möglich bzw. sinnvoll, je eine kontinuierliche Druckmessung in dem Ofenraum und in der Heizkammer durchzuführen. Bei Abweichungen im Differenzdruck, z.B. dem Unterschreiten einer Mindestdruckdifferenz zwischen Ofenraum und Heizkammer, kann so die Gasströmung aus der Prozessgasversorgung in die Heizkammer beeinflusst, z.B. erhöht, werden, um die gewünschte Druckdifferenz einzuhalten.

Alternativ dazu ist es auch möglich, sowohl in dem Ofenraum als auch in der Heizkammer eine Gasströmung bereitzustellen, wobei in dem Ofenraum ein höherer Druck eingestellt wird, als in der Heizkammer. Dadurch kann das Gas-Binder-Gemisch ggf. schneller aus der Heizkammer abgeführt werden.

Nach dem Abführen des Gas-Binder-Gemisches aus der Heizkammer kann das Gas-Binder-Gemisch einer kontrollierten Verbrennung zugeführt werden. Bei einer kontrollierten Verbrennung können Gas wie auch die Binderbestandteile somit umweltfreundlich verbrannt werden, insbesondere einer thermischen Nachverbrennung oder einer direkten Verbrennung zugeführt werden. Je nach Trägergas bzw. Gas der Gasströmung ist hierbei eine unterschiedliche Reaktion einzusetzen. Im Falle eines brennbaren Trägergases, beispielsweise Wasserstoff, kann das Gas selbst direkt verbrannt werden, das Gas kann also als Brennstoff für die kontrollierte Verbrennung eingesetzt werden, wobei die Binderbestandteile mit verbrennen. Sofern ein nicht brennbares Trägergas eingesetzt wird (z.B. Argon oder Stickstoff), kann das Gas in einer Flamme thermisch nachverbrannt werden, beispielsweise in einem Wasserstoffgas oder anderen brennbaren Gasen. Hierfür kann ein separater Brenner bzw. eine entsprechende Brennkammer eingesetzt werden.

In einer bevorzugten Ausführungsform der Erfindung ist es vorgesehen, dass, nach dem Abführen des Gas-Binder-Gemisches aus der Heizkammer, Klappen der Heizkammer geöffnet werden, um ein verbessertes Evakuieren der Heizkammer und/oder eine verbesserte Gaskühlung zu gewährleisten. Mit anderen Worten weist die Heizkammer öffenbare Klappen auf, mittels welcher der Gasaustausch zwischen Heizkammer und Ofenraum steuerbar ist.

In der Heizkammer kann bevorzugt ein Bindermesssystem installiert sein, um den Zustand oder die Temperatur der Lötcharge festzustellen. Zur Temperaturmessung kann das Bindermesssystem einen Temperatursensor in dem Ofenraum und/oder in der Heizkammer umfassen. Zur Zustandserkennung der Lötcharge kann das Bindermesssystem ein en Gassensor umfassen, der die Bestandteile des Gas-Binder-Gemisches erkennt.

Somit kann das Bindermesssystem bevorzugt eine Feststellung ausgeben, ob in der Heizkammer eine Entbinderung stattfindet bzw. ob in der Heizkammer Binderbestandteile bzw. gasförmige Bestandteile der Lotpaste vorliegen.

Das Bindermesssystem kann auch dazu hergerichtet sein, einen Druck zu messen, insbesondere einen Heizkammerdruck, einen Ofenraumdruck oder einen Relativdruck zwischen Heizkammer und Ofenraum. Beispielsweise kann die Messung des Heizkammerdruckes einen Parameter liefern zur Erkennung, ob eine Entbinderung stattfindet, da im Rahmen der Erfindung herausgefunden werden konnte, dass der Heizkammerdruck bei Auftreten der Entbinderung ansteigt.

In einer bevorzugten Ausführungsform ist das Bindermesssystem dazu hergerichtet, die Temperatur, den Druck sowie die Gaszusammensetzung zu erfassen, um aus den verschiedenen Parametern den Zustand der Lötcharge zu bestimmen.

vor dem Bereitstellen der Gasströmung in der Heizkammer kann somit bevorzugt der Zustand oder die Temperatur der Lötcharge gemessen werden und festgestellt werden, ob eine Entbinderung der Lötcharge geschieht. Das Bereitstellen der Gasströmung in der Heizkammer kann in dieser bevorzugten Ausführungsform in Ansprechen auf die Feststellung, ob eine Entbinderung der Lötcharge geschieht, erfolgen.

Ein erfindungsgemäßer Vakuumofen zum Hochtemperaturlöten einer Lötcharge umfasst eine Heizkammer zur Aufnahme der Lötcharge. Die Heizkammer ist öffenbar gestaltet, so dass die Lötcharge auf einfache Weise in die Heizkammer eingebracht und herausgenommen werden kann. Die Heizkammer ist bevorzugt von einem Ofenraum umgeben.

Der Vakuumofen umfasst ferner zumindest eine Heizeinrichtung zum Aufheizen der Lötcharge. Die Heizeinrichtung umfasst beispielsweise eine Anzahl von Heizern, die um die Lötposition der Lötcharge herum angeordnet sind. Bei den Heizern kann es sich um Heizplatten handeln, die entsprechend den im Vakuumofen herrschenden Temperaturen temperaturstabil ausgeführt sind. Beispielsweise kann die Heizeinrichtung vier oder sechs Heizer aufweisen, um die Lötcharge von vier oder sechs Raumseiten zu erwärmen.

Der Vakuumofen umfasst ferner einen Gaseinlass zum Bereitstellen einer Gasströmung. Mit anderen Worten kann im Betrieb des Vakuumofens, wenn also insbesondere der Lötprozess gestartet werden soll oder gerade läuft, in das Restvakuum des Vakuumofens mittels des Gaseinlasses ein Gas eingebracht werden.

In einer ersten Ausführungsform führt der Gaseinlass die Gasströmung in den Ofenraum, der die Heizkammer umgibt. Das Gas erzeugt in dem Ofenraum einen Überdruck im Vergleich zu dem Heizkammerdruck. Mit anderen Worten ist der Ofenraumdruck höher als der Heizkammerdruck. Das Gas kann schließlich durch die thermische Isolation in die Heizkammer eindringen und dort die gasförmigen Binderbestandteile aufnehmen.

In einer zweiten Ausführungsform ist ein erster Gaseinlass in dem Ofenraum sowie ein zweiter Gaseinlass in der Heizkammer vorgesehen. Der zweite Gaseinlass führt das Gas hierbei unmittelbar in die Heizkammer, welche bevorzugt möglichst gasdicht gegenüber dem Ofenraum ausgeführt ist.

Das in die Heizkammer eingebrachte Gas kann beim Durchströmen der Heizkammer, d.h. beim Umströmen der Lötcharge, gasförmige Binderbestandteile aufnehmen. Die gasförmigen Binderbestandteile können dabei beispielsweise von der Gasströmung "mitgerissen" werden, also in die Gasströmung eintreten und von den Gasteilchen mitgeführt werden. Die Gasströmung durchströmt die Heizkammer und gelangt zu einem Gasauslass, welches zum Abführen von Gas-Binder-Gemisch aus der Heizkammer vorgesehen ist. An dem Gasauslass ist ein Entbinderungsrohr bzw. eine Entbinderungsstrecke zum Weiterleiten des Gas-Binder-Gemisches anschließbar.

In einer weiteren Ausführungsform der Erfindung kann an einem fernen Ende des Entbinderungsrohres eine Absaugpumpe vorgesehen sein, um die Strömungsgeschwindigkeit der Gasströmung durch die Heizkammer bzw. aus der Heizkammer heraus einzustellen bzw. zu erhöhen. Diese Ausführungsform entspricht daher der Vakuumentbinderung.

Die Heizkammer kann von einem Ofenraum der Vakuumkammer umgeben sein. Mit anderen Worten ist die Heizkammer so in der Vakuumkammer angeordnet, dass sie allseits vom Ofenraum umschlossen ist. Der zweite Gaseinlass führt hierbei durch den Ofenraum hindurch, so dass der zweite Gaseinlass bevorzugt ein Gasrohr aufweist, welches durch den Ofenraum geführt ist. Bevorzugt ist der zweite Gaseinlass gegenüber dem die Heizkammer umgebenden Ofenraum mittels ersten Dichtmitteln zum gasdichten Abdichten des zweiten Gaseinlasses abgedichtet. Besonders bevorzugt kann hiermit erreicht werden, dass das Gas der Gasströmung auch im Inneren der Heizkammer appliziert wird, wodurch das Abführen des Gas-Binder-Gemisches aus der Heizkammer ggf. beschleunigt wird.

Analog sind bevorzugt zweite Dichtmittel vorgesehen zum gasdichten Abdichten des Entbinderungsrohres gegenüber dem die Heizkammer umgebenden Ofenraum.

Die Heizkammer ist besonders bevorzugt insgesamt gegenüber dem die Heizkammer umgebenden Ofenraum weitestgehend gasdicht abgedichtet ausgeführt.

Beispielsweise umfasst die Heizkammer bevorzugt eine thermische Isolation, die die Umwandung der Heizkammer bildet und die Wärme des Vakuumofens im Inneren der Heizkammer hält. Die thermische Isolation kann eine Graphitfilzisolation umfassen, um eine weitgehende Gasdichtigkeit herzustellen. Mit anderen Worten wird ein spezieller Graphitfilz eingesetzt, der zwischen der Heizkammer und dem Ofenraum anbringbar ist und der die synergistische Doppelaufgabe der Wärmeisolation sowie der weitestgehenden Gasdichtigkeit zu erreichen vermag. Somit ist es möglich, Gasteilchen um die Lötcharge herum anzuwenden bzw. auszubringen, ohne dass Binderbestandteile in den die Heizkammer umgebenden Raum dringen. Hierdurch wird also zusätzlich gewährleistet, dass keine Binderbestandteile in den die Heizkammer umgebenden Raum dringen bzw. dass der unerwünschte Strom an Binderbestandteilen in den die Heizkammer umgebenden Raum reduziert werden kann. Die Binderbestandteile können sich somit nicht mehr an kalten bzw. gekühlten Außenwänden oder auch in Vakuumpumpen absetzen und dort nicht mehr Verunreinigungen und erhöhten Wartungsbedarf verursachen.

Die Graphitfilzisolation kann heißseitig mit einer zusätzlichen Schutzschicht versehen sein, die die Gasdichtigkeit weiter erhöht.

Die Heizeinrichtung umfasst zumindest einen Widerstandsheizleiter, wobei der zumindest eine Widerstandsheizleiter aus Graphit oder faserverstärktem Graphit besteht. Die Widerstandsheizleiter sind beispielsweise als plattenförmig bzw. in einer Ebene angeordnete Heizleiter realisiert, wobei ein Stromdurchfluss durch die Heizleiter eine Wärmeabgabe erzeugt.

Zur Speisung der Widerstandsheizleiter mit dem benötigten Strom kann die Heizeinrichtung Stromzuführungen umfassen, die bevorzugt als isolierte Stromzuführungen ausgebildet sind.

Die Stromzuführungen können schließlich Stromleitungsdichtmittel umfassen, so dass auch zwischen den Stromzuführungen und der thermischen Isolation Gasdichtigkeit hergestellt werden kann. Mit anderen Worten führen die Stromzuführungen durch die thermische Isolation hindurch und bilden daher Öffnungsstellen der thermischen Isolation. Diese Öffnungsstellen, insbesondere alle Öffnungsstellen der thermischen Isolation werden mit Dichtmitteln abgedichtet, um den Gasaustausch zwischen der Heizkammer und dem die Heizkammer umgebenden Ofenraum zu verringern.

Die Heizkammer kann besonders bevorzugt Klappen zum Öffnen der Heizkammer aufweisen, so dass die Heizkammer in einem geöffneten Zustand der Heizkammer eine verbesserte Evakuierbarkeit aufweist und/oder so dass eine effektive Gaskühlung erzielbar ist. Mit anderen Worten weist die Heizkammer einen geöffneten und einen geschlossenen Zustand auf. Die Heizkammer wird beispielsweise so betrieben, dass diese den geöffneten Zustand einnimmt, wenn keine Freisetzung von Binderbestandteilen zu erwarten ist. In dem geöffneten Zustand der Heizkammer wird bevorzugt auch keine Gasströmung in der Heizkammer bereitgestellt. Die Heizkammer kann ferner so betrieben werden, dass diese den geschlossenen Zustand, einnimmt, sobald ein entsprechender Evakuierungsgrad des Vakuumofens erreicht ist und/oder sobald eine Freisetzung von Binderbestandteilen zu erwarten ist. Die Steuerung der Klappen der Heizkammer kann daher in Ansprechen auf einen Druckmesswert eines Druckmessers im Vakuumofen eingestellt werden und/oder in Ansprechen auf einen Temperaturmesswerts eines Temperaturmessers im Vakuumofen.

Der Vakuumofen kann ein Bindermesssystem aufweisen zum Feststellen, in welchem Zustand oder Temperaturbereich sich die Lötcharge befindet. Das Bindermesssystem kann also den genannten Druckmesser und/oder den genannten Temperaturmesser umfassen und kann beispielsweise anhand von bereitgestellten Daten der Lotpaste bzw. der Lötcharge die Freisetzung von gasförmigen Binderbestandteilen antizipieren. Ggf. können die Klappen der Heizkammer in Ansprechen auf die Feststellung des Bindermesssystems steuerbar sein. Mit anderen Worten kann das Bindermesssystem ein Steuersignal erzeugen und das Steuersignal entweder an die Klappen der Heizkammer oder an die motorische Steuerung der Klappen der Heizkammer übertragen. Nach Erhalt des Steuersignals kann die Klappenstellung der Klappen in Ansprechen auf die Feststellung des Bindermesssystems verändert werden.

In einem Beispiel werden die Klappen derart gesteuert, dass zu Prozessbeginn bis zur Entbinderungsphase sowie nach der Entbinderungsphase bis zum Ende der Lötphase die Klappen geöffnet sind und so eine möglichst gute Evakuierung der Heizkammer im Hochvakuumbereich ermöglichen. Die Klappen sind dabei bevorzugt so ausgeführt, dass sie eine thermische Isolation im Sinne eines Strahlungsschildes darstellen, um eine ausreichend gute Temperaturhomogenität im Nutzraum (Heizkammer) gewährleisten. Beispielsweise kann dies realisiert werden, indem die Klappen nicht seitlich öffnen, sondern im geöffneten Zustand die bereitgestellte Öffnung für Wärmestrahlung vollständig verdecken.

Nach Ende der Lötphase sorgen die geöffneten Klappen zudem für eine bessere Durchströmung der Heizkammer mit Kühlgas und somit für eine effiziente Schnellkühlung der Charge.

Während der Entbinderung werden die Klappen geschlossen, um ein Ausströmen von Gas-Binder-Gemisch aus der Heizkammer zu unterbinden.

Die Steuerung der Klappen bzw. der Entbinderungsphase erfolgt bevorzugt einerseits über einen Temperatursensor, der die Temperatur in der Heizkammer überwacht und den Beginn der Entbinderungsphase steuert. Das Ende der Entbinderungsphase und damit das Öffnen der Klappen kann wahlweise über ein Messsystem erfolgen. Alternativ kann das Ansteuern der Klappen nach Ablauf einer definierten Prozesszeit erfolgen.

Der Vakuumofen kann ein Absperrventil (16) zum Bereitstellen einer Prozessgasversorgung umfassen, um aus der Prozessgasversorgung die Gasströmung in der Heizkammer zu erzeugen bzw. in der Heizkammer bereit zu stellen.

Das Absperrventil (16) kann den Gasstrahl bzw. die Gasströmung in Ansprechen auf die Feststellung des Bindermesssystems zur Verfügung stellen. Mit anderen Worten kann das Bindermesssystem ein weiteres Steuersignal erzeugen und an das Absperrventil bzw. an die Steuereinheit des Absperrventils übertragen, so dass das Absperrventil in Ansprechen auf das weitere Steuersignal öffnet oder schließt.

Bevorzugt ist eine Abbrandeinrichtung zum kontrollierten Abbrennen des Gas-Binder-Gemisches umfasst. Vermittels der Abbrandeinrichtung kann das aus der Heizkammer herausgeführte Gas-Binder-Gemisch verbrannt werden, so dass die Binderbestandteile nicht unverbrannt in die Atmosphäre gelangen. Somit kann auch ein Beitrag zum Umweltschutz geleistet werden.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine Ausführungsform des Ofenraums eines Vakuumofens,
- Fig. 2: eine Ausführungsform eines Vakuumofens,
- Fig. 3: eine weitere Ausführungsform eines Vakuumofens.

### Detaillierte Beschreibung der Erfindung

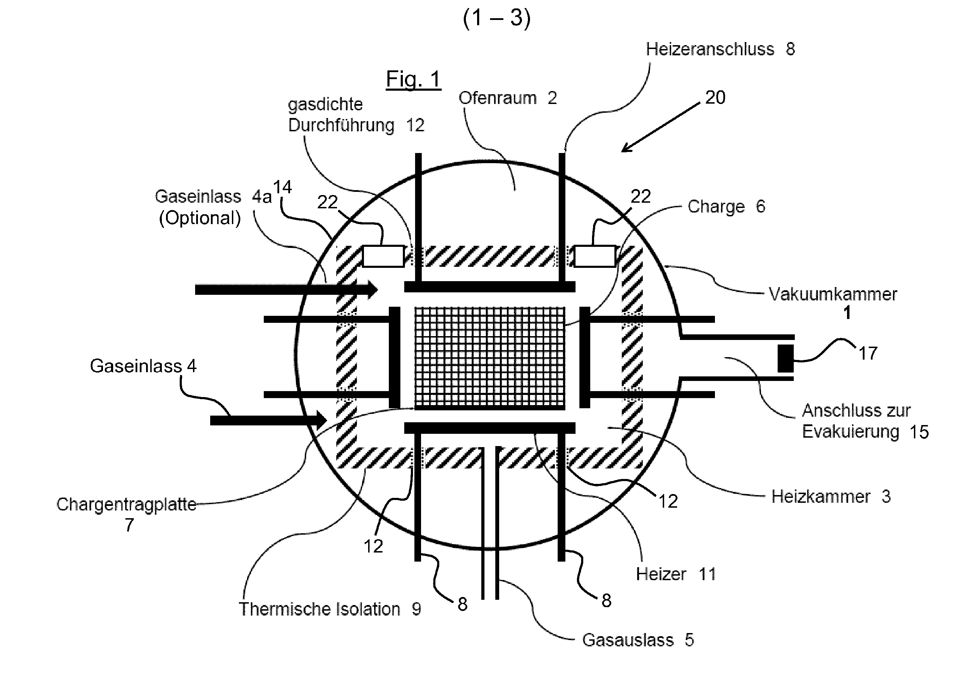

In Fig. 1 ist ein Vakuumofen 20 mit vier um eine in eine Heizkammer 3 eingebrachte Charge 6 angeordnete Heizer 11 dargestellt. Die Heizer 11 sind in dieser Ausführungsform jeweils senkrecht zueinander angeordnet und umgeben die Charge 6 somit insgesamt von vier Raumseiten, so dass eine gleichmäßige Wärmeabgabe der Heizer 11 auf die Charge 6 gewährleistet wird.

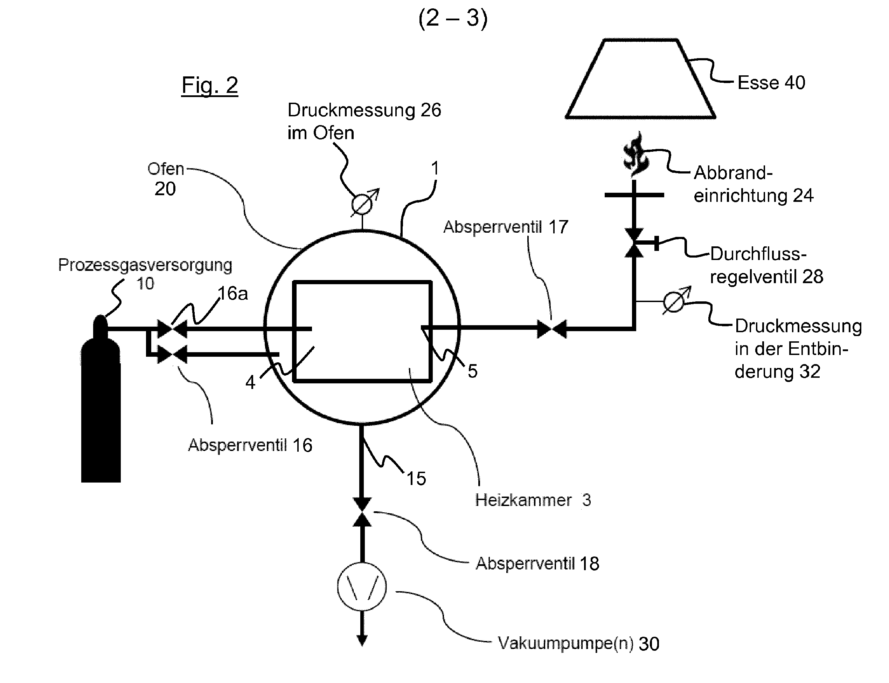

Der Vakuumofen 20 weist eine Vakuumkammer 1 auf, die mittels einer an den Anschluss 15 zur Evakuierung angeschlossenen Vakuumpumpe 30 (siehe z.B. Fig. 2) evakuiert werden kann. Die Heizkammer 3 ist innerhalb der Vakuumkammer 1 angeordnet und von einem Ofenraum 2 durch eine thermische Isolation 9 getrennt. Durch die thermische Isolation 9 sind zahlreiche Durchführungen gelegt, beispielsweise die Durchführung 12 für den Heizeranschluss 8, mittels welcher die Heizer 11 versorgt werden. Bei den Heizeranschlüssen 8 handelt es sich typischerweise um stromführende Heizerleiter 8.

In dem mit Fig. 1 gezeigten Beispiel sind acht stromführende Heizerleiter 8 zur Versorgung von vier Heizern 11 installiert, wobei die stromführenden Heizerleiter 8 an gasdichten Durchführungen 12 durch die thermische Isolation 9 durchgeführt werden. Die stromführenden Heizerleiter 8 werden bevorzugt derart ausgeführt, dass zwischen diesen und der thermischen Isolation 9 möglichst geringe Gasleckage auftritt, durch die organische Binderbestandteile in den Ofenraum 2 gelangen können. Bevorzugt wird die thermische Isolation 9 derart gestaltet, dass Gasleckagen möglichst minimiert werden oder sogar vermieden werden, insbesondere für den Fall, dass die Vakuumkammer 1 gekühlte Außenwände 14 des Ofenraums 2 aufweist. Schließlich können bei Gasleckagen organische Binderanteile aus der Heizkammer 3 in den Ofenraum 2 gelangen und sich ggf. dort, an den gekühlten Außenwänden 14 oder an einer Vakuumpumpe 30 absetzen.

In den Ofenraum 2 ist ein Gaseinlass 4 geführt, um Gas aus der Prozessgasversorgung 10 in den Ofenraum 2 zu leiten. Das Gas wird nach Möglichkeit nur im Temperatur- bzw. Zeitbereich der Entbinderung in den Ofenraum 2 geleitet. Beispielsweise kann mittels eines Bindermesssystems der Zustand der Lötcharge erfasst werden und die Prozessgasversorgung 10 danach gesteuert werden, ob eine Entbinderung von dem Bindermesssystem festgestellt wird.

In die Heizkammer 3 ist ferner ein Gaseinlass 4a geführt, welcher beispielsweise im Temperaturbereich der Entbinderung kontinuierlich Gas direkt in die Heizkammer 3 des Vakuumofens einleitet. Mit dem Gaseinlass 4a kann die die Heizkammer 3 durchströmende Gasströmung deutlich verstärkt werden, da das Gas nicht erst durch die thermische Isolation 9 gelangen muss, sondern direkt in die Heizkammer 3 strömt und dort Gas-Binder-Gemisch bildet. Zusätzlich kann die Druckdifferenz zwischen Ofenraum 2 und Heizkammer 3 verbessert eingestellt werden, wobei die Druckdifferenz stets aufrecht erhalten bleibt. Es wird also dafür gesorgt, dass der Absolutdruck in dem Ofenraum stets leicht höher eingestellt ist als derjenige in der Heizkammer 3.

Das Gas nimmt in der Heizkammer 3 gasförmige Binderbestandteile auf und führt oder trägt diese als Gas-Binder-Gemisch in dem Gasstrom oder Gasstrahl mit aus der Heizkammer 3 heraus.

Über einen Gasauslass 5, an welchem möglichst gasdicht ein Entbinderungsrohr mit der Heizkammer 3 verbunden ist, wird das Gas bzw. das Gas-Binder-Gemisch derart aus der Heizkammer 3 abgeführt, dass das Gas möglichst keinen Kontakt mit den Kesselwandungen 14 und anderen insbesondere wassergekühlten Bauteilen des Vakuumofens erlangt, wie beispielsweise auch den Heizeranschlüssen 8.

Durch die so entstehende kontinuierliche und gerichtete Durchströmung (Spülung) der Heizkammer 3 mit Gas werden die gasförmigen organischen Bestandteile der Lotpaste mitgenommen und aus dem Vakuumofen 20 herausgeführt, ohne Kontakt mit den Wandungen 14 des Vakuumkessels 20 zu erlangen. Hierdurch wird eine unerwünschte Kondensation von organischen Binderbestandteilen im Vakuumofen 20 wirksam verhindert.

In mit Fig. 1 gezeigten Ausführungsform ist die Charge 6 auf einer Chargentragplatte 7 positioniert. Die Chargentragplatte 7 kann dazu hergenommen werden, die Charge 6 in die Heizkammer 3 einzubringen, ohne dass die Charge 6 berührt werden muss. Die Charge 6 kann auch an der Chargentragplatte 7 befestigt sein, beispielsweise mit Schraubmitteln.

Bei den Heizern 11 der Ausführungsform der Fig. 1 handelt es sich um Widerstandsheizleiter 11, welche z.B. aus Graphit oder faserverstärktem Graphit (CFC) bestehen. Die Heizer 11 sind mittels der isolierten Stromzuführungen 8 im Inneren der Heizkammer 3 angeschlossen.

Die Stromzuführungen 8 werden von außerhalb des Ofenraums 2 durch den Ofenraum 2 und in die Heizkammer 3 geführt, wobei die Stromzuführungen 8 die thermische Isolation 9 durchstoßen. Die Durchstoßpunkte der Stromzuführungen 8 durch die thermische Isolation 9 werden in der Ausführungsform der Fig. 1 besonders gasdicht ausgearbeitet, so dass ein möglichst geringer Anteil der gasförmigen Binderbestandteile aus der Heizkammer 3 austreten und nicht von der Gasabsaugung an dem Entbinderungsrohr 5 erfasst werden.

Die Vakuumkammer 1, die den Ofenraum 2 und die Heizkammer 3 umfasst, weist einen Anschluss 15 zur Evakuierung der Vakuumkammer 1. An den Anschluss 15 zur Evakuierung kann eine oder mehrere Vakuumpumpen 30 (vgl. Fig. 2) angeschlossen sein.

Die Heizkammer 3 weist in der in Fig. 1 gezeigten Ausführungsform ferner Klappen 22 auf, welche geöffnet werden können, um einen Gasaustausch und/oder Druckaustausch zwischen Heizkammer 3 und Ofenraum 2 zu gewährleisten.

Fig. 2 zeigt einen Vakuumofen 20, der an eine Prozessgasversorgung 10 zur Bereitstellung von (Prozess)Gas in der Heizkammer 3 angeschlossen ist. Die Prozessgasversorgung 10 ist in der Form einer bekannten Gasflasche dargestellt. Typischerweise können in Gasflaschen kleinere Mengen Gas praktisch und einfach zur Verfügung gestellt werden. Es ist möglich, tatsächlich eine Gasflasche als Gasreservoir zu verwenden, bei größeren Anlagen und/oder einem höheren Gasbedarf kann das Prozessgas beispielsweise auch in einem Gastank 10 gespeichert sein. Bei dem Prozessgas handelt es sich bevorzugt um Wasserstoff.

Die Prozessgasversorgung 10 ist im gezeigten Beispiel über ein Absperrventil 16 an den Ofenraum 2 angeschlossen. Eine optionale Verbindungsleitung mit Absperrventil 16a verbindet die Prozessgasversorgung 10 evtl. zusätzlich direkt mit der Heizkammer 3. Die Prozessgasversorgung 10 kann mittels Steuerung des Absperrventils 16 bzw. 16a aktiviert oder deaktiviert werden.

Die Vakuumkammer 1 wird mittels des Anschlusses 15 zur Evakuierung evakuiert. Die Evakuierung der Vakuumkammer 1 wird bevorzugt durchgeführt, nachdem die Charge 6 in die Heizkammer 3 eingebracht wurde. Ggf. wird die Vakuumkammer 1 weiter während des Aufheizvorgangs des Vakuumofens 20 evakuiert, so dass ein Vakuum mit höherer Qualität erzeugt werden kann und/oder so dass bei dem Ausheizvorgang der Charge 6 aus der Charge 6 ausdiffundierende und das Vakuum ggf. beeinträchtigende Teilchen über den Anschluss 15 zur Evakuierung abgesaugt werden können. Für den Zeitraum des Aufheizens und/oder für den Zeitraum der Evakuierung bleiben die Klappen 22 (vgl. Fig. 1) geöffnet, so dass auch die Heizkammer 3 evakuierbar ist.

Das Vakuum wird in der mit Fig. 2 gezeigten Ausführungsform von Vakuumpumpen 30 erzeugt, welche über ein weiteres Absperrventil 18 an den Evakuierungsanschluss 15 angeschlossen sind.

Eine Bindermesseinrichtung 26, in diesem Fall eine Druckmessung 26 im Ofen 20, misst den im Ofenraum 2 herrschenden Druck und somit die Qualität des Vakuums. Sobald die Qualität des Vakuums beispielsweise einen vorgespeicherten Wert erreicht, kann die Bindermesseinrichtung 26 ein Steuersignal an die Klappen 22 der Heizkammer 3 schicken, so dass die Klappen 22 der Heizkammer 3 geschlossen werden.

Sind die Klappen 22 der Heizkammer 3 geschlossen, wird Gas aus der Prozessgasversorgung 10 in der Heizkammer 3 bereitgestellt, also insbesondere eine Gasströmung in der Heizkammer 3 erzeugt. Die Gasströmung strömt durch die Heizkammer 3, umströmt dabei die Charge 6 und wird an dem Gasauslass 5 der Heizkammer 3 entnommen. Die Entnahme des Gases aus der Heizkammer 3 kann passiv durchgeführt werden, indem das Gas selbst dem Druckgradienten folgend aus dem Gasauslass 5 herausströmt, insbesondere dann, wenn der Heizkammerabsolutdruck höher eingestellt ist als der Atmosphärendruck, also ein Atmosphärenüberdruck in der Heizkammer besteht.

Dem Gasauslass 5 nachgeschaltet ist ein weiteres Absperrventil 17. Das weitere Absperrventil 17 verhindert beispielsweise während des Evakuierungsvorgangs des Vakuumofens 20 das Einströmen von Gas, bspw. Luft, aus den an den Gasauslass 5 angeschalteten Bauteilen.

Soll Gas-Binder-Gemisch aus der Heizkammer 3 abgeführt werden, ist das Absperrventil 17 geöffnet. Das Gas-Binder-Gemisch kann entweder direkt in die Atmosphäre abgeführt werden, oder einer kontrollierten thermischen Nachverbrennung beispielsweise mittels einer Brenngasflamme zugeführt werden oder aber im Falle eines brennbaren Trägergases (wie z.B. Wasserstoff) direkt verbrannt werden.

Im mit Fig. 2 gezeigten Beispiel ist eine Abbrandeinrichtung 24 vorgesehen zum Verbrennen des aus der Heizkammer 3 abgeführten Gas-Binder-Gemisches. Zum Kontrollieren der Druckverhältnisse ist auch bei der Entbinderung ein Druckmesser 32 vorgesehen. Mittels des mit dem Druckmesser 32 bekannten Drucks kann beispielsweise ein Durchflussregelventil 28 gesteuert werden. An der Esse 40, also einem Rauchgasabzug über der Abbrandeinrichtung 24, kann der Abbrand des Gas-Binder-Gemisches betrieben werden.

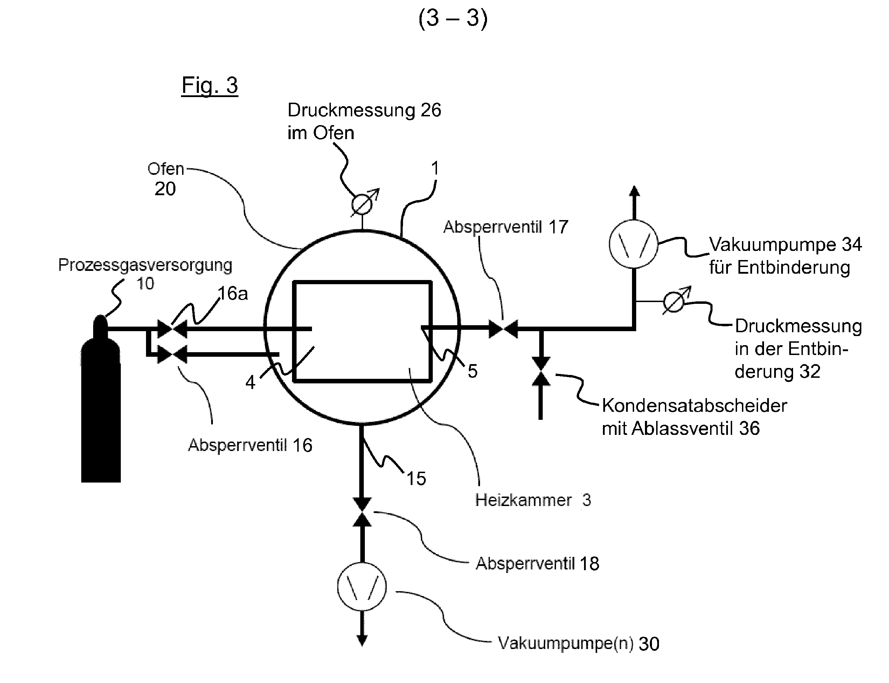

Fig. 3 zeigt eine weitere Ausführungsform eines Vakuumofens 20. Das Prozessgas wird aus der Prozessgasversorgung 10 direkt in dem Ofenraum 2 zur Verfügung gestellt. In vorteilhafter Weise können bei der gezeigten Ausführungsform Binderbestandteile aus dem Gas-Binder-Gemisch abgeschieden und an dem Kondensatabscheider 36 aus dem Prozess geführt werden. Beispielsweise können die Binderbestandteile gesammelt und umweltfreundlich entsorgt oder gar erneut für einen Lötprozess aufbereitet werden. Hierdurch kann eine nachgeschaltete Absaugpumpe 34 möglichst frei von Binderbestandteilen gehalten werden.

Der Kondensatabscheider 36 weist bevorzugt eine Kondensatstrecke mit einer Kühlfalle auf, die ein gezieltes Kondensieren der Binderbestandteile ermöglicht, bevor diese die Vakuumpumpe erreichen.

Zusammengefasst wird bei dem Verfahren im Temperaturbereich der Entbinderung (Verdampfung bzw. thermische Zersetzung des organischen Binders) kontinuierlich Gas (insbesondere Wasserstoff) aus der Prozessgasversorgung 10 in die Heizkammer 3 des Vakuumofens 20 eingeleitet, wobei ggf. ein leichter Überdruck (<100 mbar) im Ofenraum 2 gegenüber der Heizkammer 3 aufgebaut wird. Ggf. wird der Druck überdies so geregelt, dass sich ein Atmosphärenüberdruck in der Heizkammer 3 einstellt. Über ein Entbinderungsrohr 5, welches möglichst gasdicht mit der Heizkammer verbunden ist, wird das Gas derart aus der Heizkammer abgeführt, dass das Gas möglichst keinen Kontakt mit den Kesselwandungen 14 und anderen wassergekühlten Bauteilen des Vakuumofens erlangt, z.B. an den Heizeranschlüssen 8. Durch die so entstehende kontinuierliche und gerichtete Durchströmung (Spülung) der Heizkammer 3 mit Gas werden die gasförmigen organischen Bestandteile der Lotpaste mitgenommen und so aus dem Vakuumofen 20 herausgeführt, ebenfalls, ohne Kontakt mit den Wandungen 14 des Vakuumkessels 20 zu erlangen. Hierdurch wird eine unerwünschte Kondensation von organischen Binderbestandteilen im Vakuumofen 20 wirksam verhindert. Der Druckgradient zwischen Ofenraum 2 und Heizkammer 3 mit höherem Druck im Ofenraum ist Antrieb einer gerichteten Durchströmung der thermischen Isolation 9 mit Prozessgas 10 von dem Ofenraum 2 in die Heizkammer 3. Dieser Druckgradient verhindert ein Strömen von Binderbestandteilen aus der Heizkammer 3 in den Ofenraum 2.

Das Gas-Binder-Gemisch kann entweder direkt in die Atmosphäre abgeführt werden, oder einer kontrollierten thermischen Nachverbrennung mittels einer Brenngasflamme zugeführt werden, oder im Falle eines brennbaren Trägergases (wie z.B. Wasserstoff) direkt verbrannt werden oder die Binderbestandteile mittels Kondensatabscheider abgeschieden werden.

Bei Durchführung dieses Prozesses werden die organischen Bestandteile der Lotpaste über den Gasstrom aus dem Vakuumofen 20 herausgeführt, weshalb es zu keinem Kontakt zwischen den gasförmigen Binderbestandteilen und den mechanischen Vakuumpumpen 30 des Ofens 20 und somit auch nicht zu unerwünschten Kondensationsvorgängen in den Vakuumpumpen 30 kommen kann.

Die Heizkammer 3 ist weitgehend gasdicht aufgebaut. Sie wird z.B. aus einer Graphitfilzisolation 9 gebildet, welche heißseitig mit einer speziellen Schicht versehen sein kann, die eine weitgehende Gasdichtigkeit sicherstellt. Die Widerstandsheizleiter 11 bestehen z.B. aus Graphit oder faserverstärktem Graphit (CFC) und sind über isolierte Stromzuführungen 8 im Inneren der Heizkammer 3 angeschlossen.

Die Heizkammer 3 ist so aufgebaut, dass sie nach Abschluss des Entbinderungsprozesses über Klappen 22 gezielt geöffnet werden kann. Durch die so entstehenden großen Spalte wird ein Evakuieren der Heizkammer 3 gewährleistet und/oder eine effektive Gaskühlung am Prozessende.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

### Bezugszeichenliste:

- 1: Vakuumkammer
- 2: Ofenraum
- 3: Heizkammer
- 4: Gaseinlass
- 5: Gasauslass
- 6: Charge
- 7: Chargentragplatte
- 8: Heizeranschluss
- 9: Thermische Isolation
- 10: Prozessgasversorgung
- 11: Heizer
- 12: gasdichte Durchführung
- 14: (gekühlte) Außenwand des Ofenraums
- 15: Anschluss zur Evakuierung
- 16: Absperrventil Gaseinlass Ofenraum
- 16a: Absperrventil Gaseinlass Heizraum
- 17: Absperrventil
- 18: Absperrventil
- 20: Ofen
- 22: Klappe
- 24: Abbrandeinrichtung
- 26: Druckmesser im Ofen
- 28: Durchflussregelventil
- 30: Vakuumpumpe
- 32: Druckmesser
- 36: Kondensatabscheider
- 40: Esse

## Patentansprüche

1. Verfahren zum Entbindern von organischen Lotpasten mit den Schritten:
- Einbringen einer Lötcharge (6) in eine Heizkammer (3) eines Vakuumofens (20),
- Aufheizen der Lötcharge in der Heizkammer um einen Lötvorgang herbeizuführen,
- Bereitstellen einer Gasströmung in der Heizkammer, welcher die Lötcharge in der Heizkammer umspült,
- Mischen eines Gas-Binder-Gemisches aus dem in die Heizkammer eingebrachten Gas mit bei dem Lötvorgang freiwerdenden Binderbestandteilen,
- Abführen des Gas-Binder-Gemisches aus der Heizkammer.

2. Verfahren nach dem vorstehenden Anspruch, ferner mit dem Schritt
- bei dem Bereitstellen der Gasströmung in der Heizkammer (3) Aufbauen eines Gas-Überdruckes in dem Ofenraum.

3. Verfahren nach einem der vorstehenden Ansprüche, ferner mit dem Schritt
- nach dem Abführen des Gas-Binder-Gemisches aus der Heizkammer (3) Zuführen des Gas-Binder-Gemisches zu einer kontrollierten Verbrennung, insbesondere einer thermischen Nachverbrennung oder einer direkten Verbrennung, und/oder mit dem Schritt
- nach dem Abführen des Gas-Binder-Gemisches aus der Heizkammer (3) öffnen von Klappen (22) der Heizkammer, um ein Evakuieren der Heizkammer und/oder eine verbesserte Gaskühlung zu gewährleisten.

4. Verfahren nach einem der vorstehenden Ansprüche, ferner mit den Schritten
- vor dem Bereitstellen der Gasströmung in der Heizkammer (3) messen des Zustands oder der Temperatur der Lötcharge (6) und feststellen, ob eine Entbinderung der Lötcharge stattfindet,
- Bereitstellen der Gasströmung in der Heizkammer in Ansprechen auf die Feststellung, ob eine Entbinderung der Lötcharge stattfindet.

5. Vakuumofen (20) zum Hochtemperaturlöten einer Lötcharge (6), umfassend
eine Heizkammer (3) zur Aufnahme der Lötcharge, zumindest eine Heizeinrichtung (11) zum Aufheizen der Lötcharge,
einen Gaseinlass (4) zum Bereitstellen von Prozessgas in der Heizkammer, wobei das Prozessgas in der Heizkammer mit Binderbestandteilen ein Gas-Binder-Gemisch bildet,
ein Entbinderungsrohr (5) zum Abführen des Gas-Binder-Gemisches aus der Heizkammer.

6. Vakuumofen (20) nach dem vorstehenden Anspruch, ferner mit:
einem die Heizkammer (3) umgebenden Ofenraum (2),
ersten Dichtmitteln zum möglichst gasdichten Abdichten des Gaseinlasses (4a) gegenüber dem die Heizkammer (3) umgebenden Ofenraum (2), und/oder
zweiten Dichtmitteln zum möglichst gasdichten Abdichten des Entbinderungsrohres (5) gegenüber dem die Heizkammer umgebenden Ofenraum.

7. Vakuumofen (20) nach einem der Ansprüche 4 oder 5,
wobei die Heizkammer (3) gegenüber dem die Heizkammer umgebenden Ofenraum (2) möglichst gasdicht abgedichtet ausgeführt ist.

8. Vakuumofen (20) nach einem der vorstehenden Ansprüche,
wobei das Prozessgas in dem Ofenraum (2) bereitgestellt wird und ein Druckgradient zwischen Ofenraum (2) und Heizkammer (3) erzeugt wird derart, dass das Gas-Binder-Gemisch von einer Diffusion aus der Heizkammer (3) in den Ofenraum (2) gehindert wird.

9. Vakuumofen (20) nach einem der vorstehenden Ansprüche,
wobei die Heizkammer (3) eine thermische Isolation (9) umfasst, die zugleich die Umwandung der Heizkammer bildet,
wobei insbesondere die thermische Isolation (9) eine Graphitfilzisolation umfasst, um eine weitgehende Gasdichtigkeit herzustellen,
wobei insbesondere die Graphitfilzisolation heißseitig mit zumindest einer Schutzschicht versehen ist, die die Gasdichtigkeit weiter erhöht.

10. Vakuumofen (20) nach einem der vorstehenden Ansprüche,
wobei die Heizeinrichtung (11) zumindest einen Widerstandsheizleiter umfasst und
wobei der zumindest eine Widerstandsheizleiter aus Graphit oder faserverstärktem Graphit besteht, und/oder
wobei die Heizeinrichtung (11) isolierte Stromzuführungen (8) umfasst und die isolierten Stromzuführungen Stromleitungsdichtmittel umfassen, so dass auch zwischen den Stromzuführungen und der thermischen Isolation (9) Gasdichtigkeit hergestellt ist.

11. Vakuumofen (20) nach einem der vorstehenden Ansprüche, ferner umfassend
Klappen (22) zum Öffnen der Heizkammer (3), so dass die Heizkammer evakuierbar ist und/oder so dass eine effektive Gaskühlung erzielbar ist und/oder so dass die Heizkammer während der Entbinderung möglichst gasdicht schließbar ist.

12. Vakuumofen (20) nach einem der vorstehenden Ansprüche, ferner umfassend
ein Absperrventil (16) zum Bereitstellen oder Abstellen einer Prozessgasversorgung (10), um aus der Prozessgasversorgung die Gasströmung in dem Ofenraum (2) und/oder der Heizkammer (3) zur Verfügung zu stellen.

13. Vakuumofen (20) nach einem der vorstehenden Ansprüche, ferner umfassend
ein Bindermesssystem (26, 32) zum Feststellen, in welchem Zustand oder Temperaturbereich sich die Lötcharge (6) befindet.

14. Vakuumofen (20) nach den beiden vorstehenden Ansprüchen,
wobei das Absperrventil (16) die Gasströmung in Ansprechen auf die Feststellung des Bindermesssystems zur Verfügung stellt.

15. Vakuumofen (20) nach einem der vorstehenden Ansprüche, ferner umfassend
eine Abbrandeinrichtung (24) zum kontrollierten Abbrennen des Gas-Binder-Gemisches.
